# EUROPEAN PATENT APPLICATION

(11) **EP 4 576 414 A1**
(43) Date of publication of application: **25.06.2025**
(21) Application number: 23855190.7
(22) Date of filing: 18.08.2023
(51) Int. Cl.: H01M 50/618, H01M 50/627

(54) **ELECTROLYTE SOLUTION INJECTION METHOD AND ELECTROLYTE SOLUTION INJECTION DEVICE**

(30) Priority: 19.08.2022 KR 20220104378
(71) Applicant: LG Energy Solution, Ltd., Seoul 07335 (KR)
(72) Inventor: KIM, Jin Gon, Daejeon 34122 (KR); KANG, Tae Won, Daejeon 34122 (KR)
(74) Representative: Goddar, Heinz J.
(86) International application number: PCT/KR2023/012283
(87) International publication number: WO 2024/039224

(57) **Abstract**

In an apparatus for injecting an electrolyte into a secondary battery, an apparatus for injecting an electrolyte according to the present invention may include: a chamber that accommodates the secondary battery therein; an injecting part that stores the electrolyte therein and injects the electrolyte into the secondary battery through a difference in pressure between the inside thereof and the inside of the chamber; and a compressing part that is connected to the injecting part and compresses the inside of the injecting part so as to inject the electrolyte remaining in the injecting part into the secondary battery.

## Description

### TECHNICAL FIELD

### CROSS-REFERENCE TO RELATED APPLICATION

The present application claims the benefit of the priority of Korean Patent Application No. 10-2022-0104378, filed on August 19, 2022, which is hereby incorporated by reference in its entirety.

### TECHNICAL FIELD

The present invention relates to a method and apparatus for injecting an electrolyte, which injects the electrolyte into a battery case.

### BACKGROUND ART

In general, types of secondary batteries include nickel-cadmium batteries, nickel-hydrogen batteries, lithium-ion batteries, lithium-ion polymer batteries, and the like. These secondary batteries are applied to and used in not only small-sized products such as digital camera, P-DVD, MP3P, mobile phone, PDA, portable game device, power tool and E-bike, but also large-sized products such as electric vehicle or hybrid vehicle, which require high output, energy storage systems for storing surplus electricity or new renewable energy, and energy storage systems for backup.

In order to manufacture these secondary batteries, a positive electrode current collector and a negative electrode current collector are coated with electrode active material slurry to manufacture a positive electrode and a negative electrode, and then the positive electrode and the negative electrode are stacked at both sides of a separator to form an electrode assembly having a predetermined shape. Thereafter, a battery case accommodates the electrode assembly and is sealed after an electrolyte is injected thereinto.

The injecting of the electrolyte into the battery case is performed through a difference in internal pressure between an injecting apparatus and a vacuum chamber in a state in which the battery case is accommodated in the vacuum chamber. For example, the inside of the vacuum chamber in which the battery case is accommodated is maintained in a vacuum state, and a valve for adjusting opening or closing between the vacuum chamber and the injecting apparatus in which the electrolyte is stored is opened, so that the electrolyte stored in the injecting apparatus is injected into the battery case.

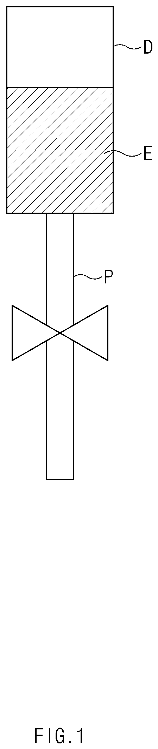

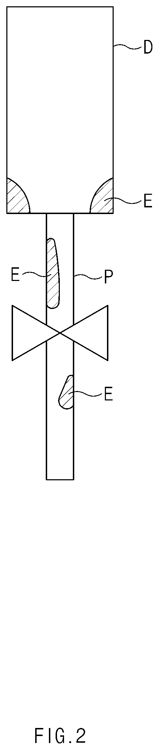

However, there is often a problem that the electrolyte remains in the injecting apparatus and a passage during this injecting of the electrolyte. For example, FIG. 1 is a cross-sectional view of a state in which an electrolyte E is stored in an injecting apparatus D according to Comparative Example, and FIG. 2 is a cross-sectional view of a state after the electrolyte E is discharged from the injecting apparatus D according to Comparative Example. As in FIG. 2, even though the electrolyte E is injected through a difference in pressure between the inside of a chamber and the inside of the injecting apparatus D, the electrolyte E may remain in the injecting apparatus D according to Comparative Example.

This electrolyte E remaining in the injecting apparatus D and a passage P causes problems that the injecting apparatus D and the passage P corrode, or efficiency of injecting the electrolyte E is deteriorated. Thus, there is a need for an apparatus and method for injecting an electrolyte so that there is no remaining electrolyte.

### DISCLOSURE OF THE INVENTION

### TECHNICAL PROBLEM

An object of the present invention for solving the above problems is to provide an apparatus and method for injecting an electrolyte, which additionally injects the electrolyte remaining in an injecting part.

### TECHNICAL SOLUTION

A method for injecting an electrolyte according to an embodiment of the present invention may include: a vacuum process of maintaining the inside of a chamber in a vacuum state in a state in a secondary battery is accommodated in the chamber; an injecting process of injecting the electrolyte into the secondary battery through a difference in pressure between the inside of the chamber that is in the vacuum state and the inside of an injecting part in which the electrolyte is stored; and an additionally injecting process of compressing the inside of the injecting part by a compressing part connected to the injecting part so as to inject the electrolyte into the secondary battery.

The method for injecting the electrolyte according to the present invention may further include a supplying process of supplying the electrolyte stored in a storing part to the injecting part, and the supplying process may include a forming process of forming a pneumatic space between the electrolyte and the compressing part as the electrolyte is supplied to the injecting part.

The supplying process may further include an ascending process of allowing the compressing part to be pushed and ascend as the pneumatic space is formed in the injecting part.

In the injecting process, an injection passage that allows the chamber and the injecting part to communicate with each other may be opened in a state, in which the vacuum state of the chamber is maintained, so that the electrolyte stored in the injecting part is injected into the secondary battery.

In the injecting process, the pneumatic space may be maintained after the electrolyte is injected.

In the additionally injecting process, the compressing part may compress the pneumatic space generated in the forming process so as to inject the electrolyte.

In the additionally injecting process, the electrolyte remaining in the injecting part may be injected through a descending operation of the compressing part.

In an apparatus for injecting an electrolyte into a secondary battery, aAn apparatus for injecting an electrolyte according to the present invention may include: a chamber that accommodates the secondary battery therein; an injecting part that stores the electrolyte therein and injects the electrolyte into the secondary battery through a difference in pressure between the inside thereof and the inside of the chamber; and a compressing part that is connected to the injecting part and compresses the inside of the injecting part so as to inject the electrolyte remaining in the injecting part into the secondary battery.

The apparatus for injecting the electrolyte may further include an injection passage that allows the injecting part and the secondary battery to communicate with each other, and adjusts opening or closing.

The injection passage may be provided in one surface of the injecting part, and the compressing part may be connected to the other surface of the injecting part.

The one surface of the injecting part, in which the injection passage is provided, may include an inclined surface that is inclined.

The one surface of the injecting part, in which the injection passage is provided, may have an inner diameter that gradually decreases toward the injection passage.

The apparatus for injecting the electrolyte according to the present invention may include a storing part that stores the electrolyte, and a pump that allows the electrolyte in the storing part to flow into the injecting part.

The pump may supply the electrolyte to the injecting part so that a pneumatic space is defined in the injecting part, and the pneumatic space may be defined between the electrolyte and the compressing part.

The compressing part may press the pneumatic space so as to allow the electrolyte remaining in the injecting part to flow into the secondary battery.

### ADVANTAGEOUS EFFECTS

According to the preferred embodiments of the present invention, the electrolyte remaining in the injecting part may be additionally injected into the secondary battery to prevent the problems that due to the remaining electrolyte, the injection efficiency is deteriorated, and the injecting apparatus corrodes.

In addition, the effects may be included which could be easily predicted by those skilled in the art from the configurations according to the preferred embodiments of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention. The present invention should not be construed as being limited to only the drawings.
FIG. 1 is a cross-sectional view of a state in which an electrolyte is stored in an injecting apparatus according to Comparative Example.
FIG. 2 is a cross-sectional view of a state after an electrolyte is discharged from an injecting apparatus according to Comparative Example.
FIG. 3 is a schematic view of an apparatus for injecting an electrolyte according to an embodiment of the present invention.
FIG. 4 is a schematic view of a state in which a compressing part compresses the inside of an injecting part according to an embodiment of the present invention.
FIG. 5 is an enlarged view illustrating an injecting part and a compressing part according to an embodiment of the present invention.
FIG. 6 is a block diagram of a method for injecting an electrolyte according to an embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

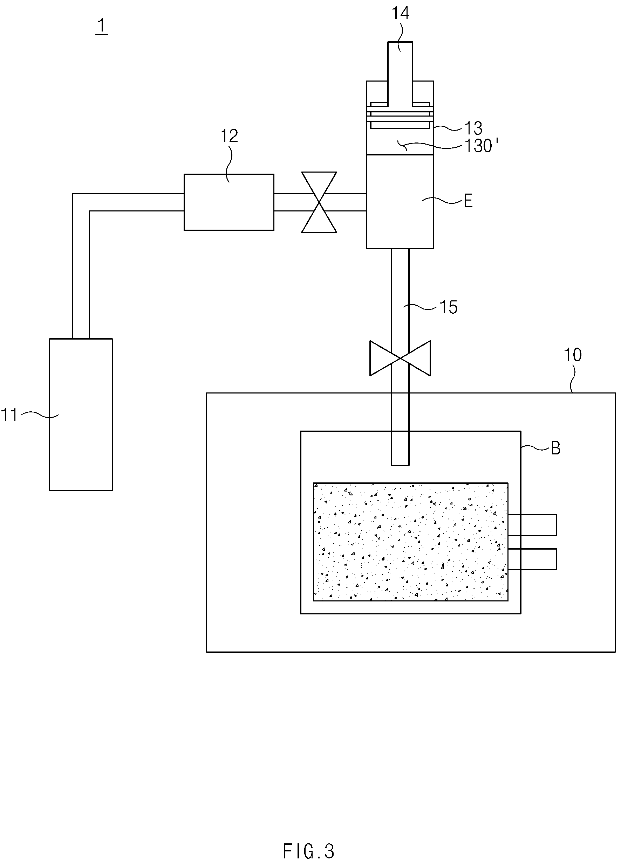

FIG. 3 is a schematic view of an apparatus 1 for injecting an electrolyte according to an embodiment of the present invention.

Referring to FIG. 3, the apparatus 1 for injecting the electrolyte may inject the electrolyte into a secondary battery. For example, the secondary battery may include a battery case and an electrode assembly accommodated in the battery case, and the electrolyte may be injected into the battery case in order to activate the electrode assembly. Specifically, in a state in which the apparatus 1 for injecting the electrolyte communicates with the inside of the battery case, the electrolyte stored in the apparatus 1 for injecting the electrolyte may flow into the battery case through a difference in pressure between the inside of the apparatus 1 for injecting the electrolyte and the inside of the battery case.

The apparatus 1 for injecting the electrolyte may also additionally inject, into the secondary battery, the electrolyte remaining in the inside thereof after injecting the electrolyte through the different in pressure. For example, the apparatus 1 for injecting the electrolyte may inject the electrolyte and then, compress the inside thereof so as to additionally inject the electrolyte remaining in the inside into the secondary battery.

The apparatus 1 for injecting the electrolyte may include a chamber 10, an injecting part 13, and a compressing part 14. In addition, the apparatus 1 for injecting the electrolyte may further include an injection passage 15.

The chamber 10 may define an accommodating space therein and accommodate the secondary battery therein. In addition, the chamber 10 may be connected to a vacuum pump to change the inside thereof into a vacuum state and maintain the vacuum state through the vacuum pump. That is, for an injection operation of the injecting part 13 to be described later, the chamber 10 may function to change the inside thereof into the vacuum state so that the electrolyte is injected into the secondary battery.

The injecting part 13 may communicate with the secondary battery and inject the electrolyte into the secondary battery. In other words, the injecting part 13 may store the electrolyte therein, and inject the electrolyte into the secondary battery through a difference in pressure between the inside thereof and the inside of the chamber 10.

For example, the inside of the injecting part 13 and the inside of the secondary battery may communicate with each other through the injection passage 15. Specifically, the injection passage 15 may adjust opening or closing in a state of allowing the inside of the injecting part 13 and the inside of the secondary battery to communicate with each other. In other words, the injection passage 15 may include a switching valve to adjust opening or closing of a passage so that when the inside of the chamber 10 reaches a vacuum state and is maintained in the vacuum state, the injection passage 15 functions to open the passage and allow the electrolyte in the injecting part 13 to flow into the secondary battery.

Specifically, the apparatus 1 for injecting the electrolyte may further include a storing part 11 that stores the electrolyte, and a pump 12 that allows the electrolyte in the storing part 11 to flow into the injecting part 13. In this case, the pump 12 may include a Hibar pump. In other words, the pump 12 may suction a fluid by generating an internal negative pressure through a retreating plunger member to open a valve of an inlet, and discharge the fluid to the outside by advancing the plunger to open a valve of an outlet. However, the type of the pump 12 is not limited thereto.

The pump 12 may supply the electrolyte to the injecting part 13 by allowing the electrolyte stored in the storing part 11 to flow into the injecting part 13. As the electrolyte is supplied to the inside of the injecting part 13, a pneumatic space 130 may be defined in the injecting part 13. Here, the pneumatic space 130 may be defined between the electrolyte and the compressing part 14.

Thereafter, the electrolyte may flow from the inside of the injecting part 13 into the secondary battery through the difference in pressure between the inside of the injecting part 13 and the inside of the chamber 10 as described above, and the pressures between the inside of the injecting part 13 and the inside of the chamber 10 may be in equilibrium.

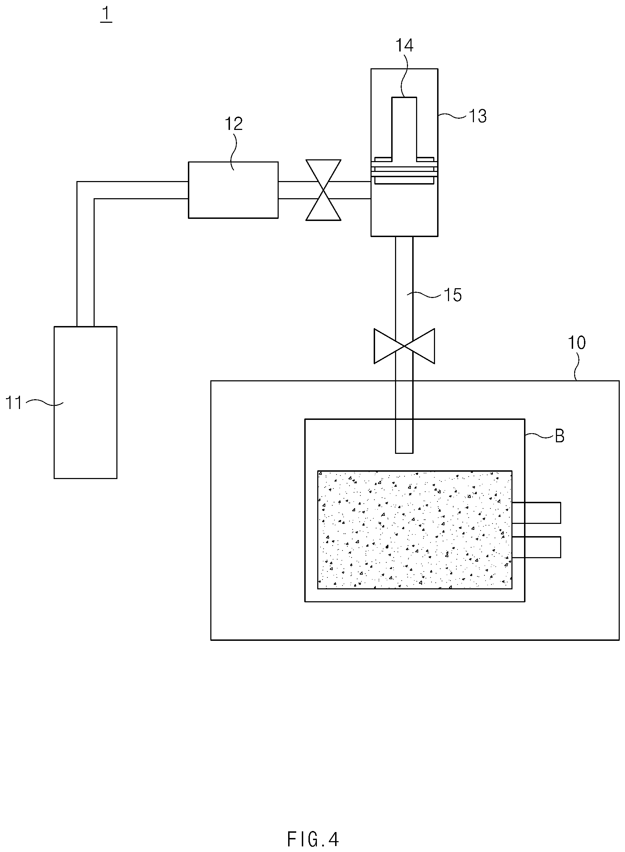

FIG. 4 is a schematic view of a state in which the compressing part 14 compresses the inside of the injecting part 13 according to an embodiment of the present invention.

Referring to FIG. 4, the compressing part 14 may compress the inside of the injecting part 13 so as to inject the electrolyte remaining in the injecting part 13 into the secondary battery. For example, the compressing part 14 may be connected to one side of the injecting part 13 so as to compress an inner space of the injecting part 13. In other words, after the electrolyte in the injecting part 13 is injected into the secondary battery through the difference in pressure between the chamber 10 and the injecting part 13, the compressing part 14 may push the electrolyte remaining in the injecting part 13 and inject the electrolyte into the secondary battery, through a separate compressing operation.

The compressing part 14 may press the pneumatic space 130 to allow the electrolyte remaining in the injecting part 13 to flow into the secondary battery. More specifically, in a state in which the injection passage 15 is provided in one surface of the injecting part 13, and the compressing part 14 is connected to the other surface of the injecting part 13, the compressing part 14 may perform the compressing operation of descending toward the one surface of the injecting part 13. That is, the compressing part 14 may press an upper side of the pneumatic space 130 to compress the inside of the injecting part 13 so that the electrolyte remaining in the injecting part 13 is pushed by the pneumatic space 130 to flow and be discharged along the injection passage 15 provided in a lower side of the injecting part 13.

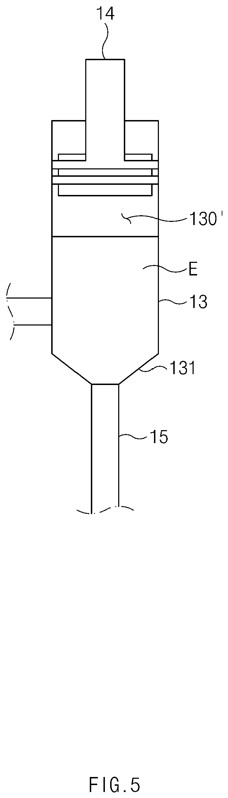

Additionally, FIG. 5 is an enlarged view illustrating the injecting part 13 and the compressing part 14 according to an embodiment of the present invention.

Referring to FIG. 5, the one surface of the injecting part 13, in which the injection passage 15 is provided, may include an inclined surface 131 that is inclined. For example, the one surface of the injecting part 13, in which the injection passage 15 is provided, may have an inner diameter that gradually decreases toward the injection passage 15. According to this structure, even when the electrolyte remains in the injecting part 13, the electrolyte may flow along the inclined surface 131 due to gravity to be injected into the secondary battery, and may be more effectively injected into the secondary battery due to the compressing operation of the compressing part 14.

As a result, the electrolyte may be injected into the secondary battery by using the difference in pressure between the chamber 10 and the injecting part 13, and then the electrolyte remaining in the injecting part 13 may be additionally injected through the compressing operation of the compressing part so that the apparatus 1 for injecting the electrolyte increases the efficiency of the electrolyte injecting process, and prevents the phenomenon in which the injecting part 13 and the injection passage 15 corrode due to the remaining electrolyte.

Hereinafter, a method for injecting an electrolyte according to another embodiment of the present invention will be described. Specific descriptions of the content in common with the content described above will be omitted.

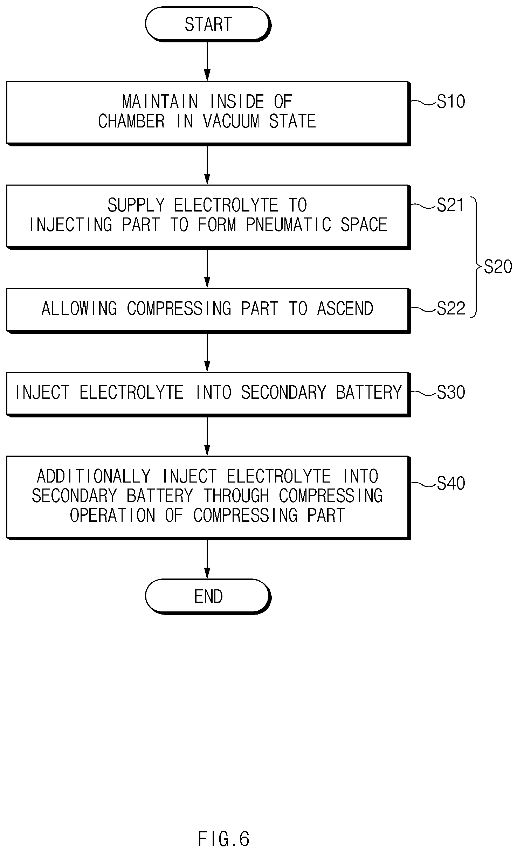

FIG. 6 is a block diagram of a method for injecting an electrolyte according to an embodiment of the present invention.

Referring to FIG. 6, the electrolyte may be injected into a secondary battery through the method for injecting the electrolyte according to an embodiment of the present invention. In addition, the electrolyte remaining in an injecting part 13 may be additionally injected into the secondary battery by a compressing part 14.

The method for injecting the electrolyte may include a vacuum process (S10), a supplying process (S20), an injecting process (S30), and an additionally injecting process (S40).

In the vacuum process (S10), the secondary battery may be accommodated in a chamber 10, and the inside of the chamber 10 may be maintained in a vacuum state. That is, the chamber 10 may be connected to a vacuum pump (not shown) to change the inside thereof into a vacuum state and maintain the vacuum state through the vacuum pump (not shown).

In the supplying process (S20), the electrolyte stored in a storing part 11 may be supplied to the injecting part 13. For example, a pump 12 may include a Hibar pump to allow the electrolyte in the storing part 11 to flow into the injecting part 13.

The supplying process (S20) may include a forming process (S21) and an ascending process (S22).

In the forming process (S21), as the electrolyte is supplied to the injecting part 13, a pneumatic space 130 may be defined between the electrolyte and the injecting part 13.

In the ascending process (S22), a compressing part 14 may be pushed to ascend as the pneumatic space 130 is defined in the injecting part 13. Thereafter, the ascending compressing part 14 may compress the pneumatic space 130 through a descending operation.

In the injecting process (S30), the electrolyte may be injected into the secondary battery through a difference in pressure between the inside of the chamber 10 that is in the vacuum state and the inside of the injecting part 13 in which the electrolyte is stored. For example, the inside of the injecting part 13 and the inside of the secondary battery may communicate with each other through an injection passage 15. Specifically, the injection passage 15 may adjust opening or closing in a state of allowing the inside of the injecting part 13 and the inside of the secondary battery to communicate with each other. In other words, the injection passage 15 may include a switching valve to adjust opening or closing of a passage so that when the inside of the chamber 10 reaches a vacuum state and is maintained in the vacuum state, the injection passage 15 functions to open the passage and allow the electrolyte in the injecting part 13 to flow into the secondary battery.

In the additionally injecting process (S40), the compressing part 14 connected to the injecting part 13 may compress the inside of the injecting part 13 so as to inject the electrolyte into the secondary battery. For example, the compressing part 14 may be connected to one side of the injecting part 13 so as to compress an inner space of the injecting part 13. In other words, after the electrolyte in the injecting part 13 is injected into the secondary battery through a difference in pressure between the chamber 10 and the injecting part 13, the compressing part 14 may push the electrolyte remaining in the injecting part 13 and inject the electrolyte into the secondary battery, through a separate compressing operation. The compressing part 14 may press the pneumatic space 130 to allow the electrolyte remaining in the injecting part 13 to flow into the secondary battery.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

### [Description of the Symbols]

| | | | |
|---|---|---|---|
| 1: | Apparatus for injecting electrolyte | 10: | Chamber |
| 11: | Storing part | 12: | Pump |
| 13: | Injecting part | 14: | Compressing part |
| 15: | Injection passage | 130: | Pneumatic space |
| 131: | Inclined surface | S10: | Vacuum process |
| S20: | Supplying process | S21: | Forming process |
| S22: | Ascending process | S30: | Injecting process |
| S40: | Additionally injecting process | | |

## Claims

1. A method for injecting an electrolyte, the method comprising:
a vacuum process of maintaining the inside of a chamber in a vacuum state in a state in a secondary battery is accommodated inside the chamber;
an injecting process of injecting the electrolyte into the secondary battery through a difference in pressure between the inside of the chamber that is in the vacuum state and the inside of an injecting part in which the electrolyte is stored; and
an additionally injecting process of compressing the inside of the injecting part by a compressing part connected to the injecting part so as to inject the electrolyte into the secondary battery.

2. The method of claim 1, further comprising a supplying process of supplying the electrolyte stored in a storing part to the injecting part,
wherein the supplying process comprises a forming process of forming a pneumatic space between the electrolyte and the compressing part as the electrolyte is supplied to the injecting part.

3. The method of claim 2, wherein the supplying process further comprises an ascending process of allowing the compressing part to be pushed and ascend as the pneumatic space is formed in the injecting part.

4. The method of claim 3, wherein, in the injecting process, an injection passage configured to allow the chamber and the injecting part to communicate with each other is opened in a state, in which the vacuum state of the chamber is maintained, so that the electrolyte stored in the injecting part is injected into the secondary battery.

5. The method of claim 4, wherein, in the injecting process, the pneumatic space is maintained after the electrolyte is injected.

6. The method of claim 2, wherein, in the additionally injecting process, the compressing part compresses the pneumatic space generated in the forming process so as to inject the electrolyte.

7. The method of claim 1, wherein, in the additionally injecting process, the electrolyte remaining in the injecting part is injected through a descending operation of the compressing part.

8. An apparatus for injecting an electrolyte into a secondary battery, the apparatus comprising:
a chamber configured to accommodate the secondary battery therein;
an injecting part configured to store the electrolyte therein and inject the electrolyte into the secondary battery through a difference in pressure between the inside thereof and the inside of the chamber; and
a compressing part connected to the injecting part and configured to compress the inside of the injecting part so as to inject the electrolyte remaining in the injecting part into the secondary battery.

9. The apparatus of claim 8, further comprising an injection passage configured to allow the injecting part and the secondary battery to communicate with each other, and adjust opening or closing.

10. The apparatus of claim 9, wherein the injection passage is provided in one surface of the injecting part, and the compressing part is connected to the other surface of the injecting part.

11. The apparatus of claim 10, wherein the one surface of the injecting part, in which the injection passage is provided, comprises an inclined surface that is inclined.

12. The apparatus of claim 11, wherein the one surface of the injecting part, in which the injection passage is provided, has an inner diameter that gradually decreases toward the injection passage.

13. The apparatus of claim 8, further comprising:
a storing part configured to store the electrolyte; and
a pump configured to allow the electrolyte in the storing part to flow into the injecting part.

14. The apparatus of claim 13, wherein the pump supplies the electrolyte to the injecting part so that a pneumatic space is defined in the injecting part,
wherein the pneumatic space is defined between the electrolyte and the compressing part.

15. The apparatus of claim 14, wherein the compressing part is configured to press the pneumatic space so as to allow the electrolyte remaining in the injecting part to flow into the secondary battery.
